(19) Europäisches Patentamt
European Patent Office
Office européen des brevets

(11) **EP 2 887 031 B1**

(12) **EUROPEAN PATENT SPECIFICATION**

(45) Date of publication and mention
of the grant of the patent:
**16.09.2020  Bulletin 2020/38**

(51) Int Cl.:
*G01J 5/00* *(2006.01)*     *G01J 5/60* *(2006.01)*

(21) Application number: **14195233.3**

(22) Date of filing: **27.11.2014**

(54) **Method for calibrating a two-wavelength pyrometer, method for determining the temperature of a semiconducting wafer and a system for determining the temperature of a semiconducting wafer**

Verfahren zur Kalibrierung eines Pyrometers mit zwei Wellenlängen, Verfahren zur Bestimmung der Temperatur eines Halbleiterwafers und System zur Bestimmung der Temperatur eines Halbleiterwafers

Procédé d'étalonnage d'un pyromètre à deux longueurs d'ondes, procédé et système pour déterminer la température d'une plaquette semi-conductrice

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.12.2013  EP 13198171**

(43) Date of publication of application:
**24.06.2015  Bulletin 2015/26**

(73) Proprietor: **LayTec AG**
**10709 Berlin (DE)**

(72) Inventors:
• **Zettler, Joerg-Thomas**
**12587 Berlin (DE)**

• **Haberland, Kolja Lutz**
**12163 Berlin (DE)**
• **Kaspari, Christian**
**12247 Berlin (DE)**
• **Nash, James Henry**
**Ceshire, WA6 OND (GB)**
• **Cornwell, David William**
**Chester, CH2 3QR (GB)**

(74) Representative: **Gulde & Partner**
**Patent- und Rechtsanwaltskanzlei mbB**
**Wallstraße 58/59**
**10179 Berlin (DE)**

(56) References cited:
**EP-A1- 2 365 307      US-A- 5 822 222**
**US-A1- 2003 102 434**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 887 031 B1

**Description**

**BACKGROUND OF THE INVENTION**

**1. Field of the Invention**

The present invention relates to a method for calibrating a two-wavelength pyrometer, a method for determining the temperature of a semiconducting wafer and a system for determining the temperature of a semiconducting wafer.

**2. Description of Related Art**

Measurements of the temperature of a semiconducting wafer belong to the most important tools during quality control in the semiconductor production.

In many applications, the semiconductor production is realised within a processing chamber and the temperature of the semiconducting wafer which is processed inside the processing chamber is measured by use of a pyrometer which is adapted to intercept and measure the thermal radiation which is emitted by the semiconducting wafer without being in contact with the wafer. Said thermal radiation is then used to calculate the temperature of the semiconducting wafer. Due to the high temperatures inside the processing chamber, the pyrometer is advantageously located outside the processing chamber and said thermal radiation passes through a window of the processing chamber before entering the pyrometer.

However, different geometrical parameters such as the positions of semiconducting wafers inside the chamber and also optical transmission characteristics of the window of the processing chamber itself may change, which may result in different outcoupling characteristics of the thermal radiation from the semiconducting wafer to the pyrometer through the window of the processing chamber. A variation of the outcoupling characteristics may severely affect the accuracy of the determination of the temperature of the semiconducting wafer. Therefore it is necessary to re-calibrate the pyrometer before starting the temperature measurement, even if it has been carefully pre-calibrated on a separate calibration stage (i.e., a black-body reference light source) before.

A calibration process may be realised in that prior to the manufacturing process a pyrometer is calibrated by providing a calibration sample inside the processing chamber.

In European Patents EP2365307B1 and EP2251658B1 the calibration sample is a sample which preferably corresponds to a semiconducting wafer in terms of size and material, and which can accurately simulate a thermal radiation which would be emitted by the real semiconducting wafer when being manufactured inside the processing chamber. The (so simulated) thermal radiation can be measured by the pyrometer which is located outside the processing chamber and the measured thermal radiation is then assigned with a certain temperature value or certain temperature values. Once such assignment - also referred to as calibration - has been carried out, a semiconducting wafer can be manufactured inside the processing chamber and the temperature can be exactly derived from the thermal radiation measured by the pyrometer (which is located outside the processing chamber) during the manufacturing process because the measured thermal radiation can be re-assigned with accurate temperature values. European Patent EP0701686B1 discloses a method for performing in-situ pyrometric measurements capable of avoiding thin-film interference artefact by emissivity correction using in-situ reflectance measurements.

Furthermore, the publication "Reflectance-Correcting Pyrometry in Thin Film Deposition Applications" by W. G. Breiland (Sandia Natl. Labs report SAND2003-1868) discloses how stray light and back-reflection artefacts in pyrometry can be corrected through additional calibration parameters.

However, the above described methods of calibrating a pyrometer comprise the following disadvantages.

Window coating in process chambers causes temperature artefacts in in-situ pyrometric measurements.

A pyrometric detector having a broader bandwidth can be used for enhancing the sensitivity of temperature sensing. However, such a pyrometric detector cannot be easily precisely calibrated with a method of the prior art, because within the bandwidth of detection the shape of the thermal emission spectrum of the sample (Planck's curve) typically differs from the shape of emission spectrum of the light source used in the calibrating integrating sphere. Furthermore, also the emissivity correction according to the method of EP0701686B1 cannot be applied to broad bandwidth in a straightforward way, because within the bandwidth of detection the shape of the thermal emission spectrum of the sample (Planck's curve) typically differs from the shape of emission spectrum of the light source used in the in-situ reflectance measurement for emissivity correction. Certain smaller, but in some applications significant remaining Fabry-Perot artefacts therefore can show up in the in-situ temperature sensing.

Finally, pyrometric temperature sensing with a broader bandwidth in the most simple case applies no spectral filter, so that the full spectral detection range of the related pyrometry detector applies - which for a typical semiconductor diode is $\gtrsim$ 300nm. The wavelength maximum of the thermal radiation is usually beyond the band-edge wavelength of the semiconductor forming the diode. This has the additional disadvantage that the detecting system becomes thermally instable. This happens because the band edge wavelength of the detecting semiconductor diode is part of the detecting bandwidth. However the band-edge wavelength of a semiconductor shifts with changing ambient temperature. Hence, the sensitivity of this detector also changes with ambient temperature. Moreover, at higher sample temperatures the thermal radiation from the sample also heats the detector, resulting in a thermally instable pyrometer with temperature off-sets due to artefacts.

It is therefore an object of the present invention to provide a method for calibrating a pyrometer which overcomes the disadvantages of the prior art. It is another object of the present invention to provide a method for determining the temperature of a semiconducting wafer and a system for determining the temperature of a semiconducting wafer which comprises a more accurate and more reliable calibration process.

## SUMMARY OF THE INVENTION

According to a first aspect of the present invention, a method for calibrating a pyrometer is disclosed according to claim 1, wherein the pyrometer is situated outside a processing chamber and is configured to intercept and measure thermal radiation from a sample positioned inside the processing chamber, the radiation travelling through a window before reaching the pyrometer, wherein the pyrometer has a first pyrometer channel working at a first effective wavelength and a second pyrometer channel working at a second effective wavelength, the first effective wavelength and the second effective wavelength being different from each other, wherein the method comprises: pre-calibrating the first pyrometer channel by means of a calibration sphere with a cold LED light source, providing a sample comprising a semiconducting wafer inside the processing chamber, heating the sample to a first temperature scanning over the complete temperature range of the pyrometer, measuring a first signal resulting from the emission of the sample for different temperatures within the scanned temperature range and assigning each value of the first temperature to the corresponding temperature measured by the first pyrometer channel, wherein a bandwidth of the first pyrometer channel is smaller than 30 nm, measuring a second signal from the sample by the second pyrometer channel, wherein a bandwidth of the second pyrometer channel is greater than 200nm, calculating a corrected value of the second temperature measured by the second pyrometer channel based on the first temperature measured by the first pyrometer channel, thereby calibrating the pyrometer, wherein the pyrometer further comprises an additional modulated light source and a filter for selecting the first wavelength $\lambda_1$, and wherein the method further comprises: calculating the reflectance R of the sample, wherein R= $\alpha_0 \cdot D_0$ is based on a measured signal $D_0$ at a clean window and a calibration factor $\alpha_0$, calculating a corrected calibration factor $\alpha_c$ based on the reflectance R and a measured signal $D_c$ received through the window including a coating, calculating a transmittance $Tw_0$ through a clean window and the transmittance $Tw_c$ through the window affected by the coating from the calibration factor $\alpha_0$ and the corrected calibration factor $\alpha_c$, and calculating the real intensity of thermal radiation $I_p^0$ at the first temperature T1 by using the reduced intensity of thermal radiation $I_p^c$, the transmittance $Tw_0$ through a clean window and the transmittance $Tw_c$ through the window affected by the coating, according to the formula $I_p^0 = (T_w^0/ T_w^c) \cdot I_p^c$.

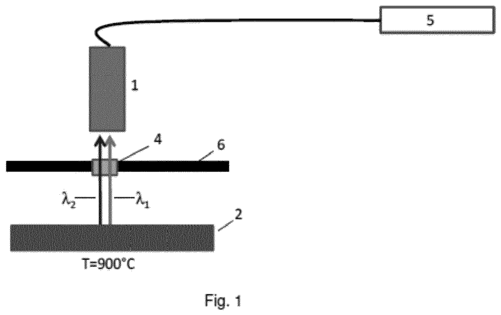

Preferably, regarding the path from the exit aperture of the pyrometer to the sample (see Fig.1), the second pyrometer channel at the wavelength $\lambda_2$ has the same optical path as the first pyrometer channel at the wavelength $\lambda_1$, thus collecting light from the same area of the sample.

According to the present invention, the first and second wavelengths are intended as the effective wavelengths for the first and second pyrometer channels, respectively. The effective wavelength is defined as the maximum of the convolution of the detector's spectral sensitivity and the Planck's curve of the thermal radiation, averaged over a certain temperature range of interest.

According to the present invention, the bandwidth of a pyrometric channel is intended as the difference between the upper wavelength and the lower wavelength in the detection spectrum sensed by the respective detector, wherein in the detection spectrum the intensity of the upper wavelength and the lower wavelength is 50% of the maximum intensity.

Preferably, the first wavelength is smaller than the second wavelength.

Preferably the absolute value of the difference between the wavelength of the first pyrometric channel and the wavelength of the second pyrometric channel ranges between 700 nm and 500 nm, more preferably between 500 nm and 100 nm and even more preferably between 100 nm and 30nm.

Preferably, the bandwidth of the first pyrometer channel is smaller than 15 nm and even more preferably it is smaller than 5 nm.

Preferably, the bandwidth of the second pyrometer channel is broader than 400 nm and even more preferably, it is broader than 700 nm.

According to a further aspect of the present invention, a third pyrometer channel may be provided for performing two-colour pyrometry (using both second and third pyrometer channels). Preferably, the third pyrometer channel has a broader bandwidth than the first pyrometer channel. Preferably, the bandwidth of the third pyrometer channel is broader than 200nm, more preferably, it is broader than 400nm and even more preferably, it is broader than 700nm. Preferably, the first wavelength ranges between 800nm and 1100nm, more preferably between 900nm and 1000nm and even more preferably between 940nm and 960nm. Preferably, the second wavelength ranges between 950nm and 1100nm or between 1450nm and 1600nm. Preferably, the effective wavelength of the third pyrometer channel ranges between 1450nm and 1600nm.

Preferably, regarding the path from the exit aperture of the pyrometer to the sample, the third pyrometer channel has the same optical path as the first and second pyrometer channel, thus collecting light from the same area of the sample.

Preferably, the second and third pyrometer channel comprises two photo detectors integrated in the same package and/or mounted co-linearly.

Preferably, the first temperature ranges between 700°C and 1100°C, more preferably between 800°C and 1000°C. Preferably, the second temperature ranges between 300°C and 1400°C.

Preferably, the method further comprises: irradiating a first optical radiation at the first wavelength onto the sample, and measuring a first reflection signal resulting from reflection of the first radiation at the sample.

Preferably, the first optical radiation is perpendicularly irradiated onto the sample with respect to the surface of the sample.

According to a second aspect of the present invention, a system adapted for determining the temperature of a semiconducting wafer is provided according to claim 7.

Preferably, the first pyrometer channel comprises a first light source adapted to irradiate a first optical radiation at the first wavelength on the sample and a first detector operating at the first wavelength. Preferably, the second pyrometer channel comprises a second detector operating at the second wavelength.

## BRIEF DESCRIPTION OF THE DRAWINGS

The accompanying drawings, together with the specification, illustrate exemplary embodiments of the present invention, and, together with the description, serve to explain the principles of the present invention.

FIG. 1      shows a system for the calibration of a pyrometer and illustrates the related method for calibration of a pyrometer at a temperature T1= 900°C according to an embodiment of the present invention.

## DETAILED DESCRIPTION OF THE DRAWINGS

In the following detailed description, only certain exemplary embodiments of the present invention are shown and described, by way of illustration. As those skilled in the art would recognize, the invention may be embodied in many different forms and should not be construed as being limited to the embodiments set forth herein.

Fig. 1 shows an apparatus for the calibration of a two-wavelength pyrometer according to a preferred embodiment of the present invention and illustrates the related method for the calibration of the pyrometer. The apparatus for calibration comprises a sensing head 1 comprising a pyrometer which needs to be calibrated. The pyrometer comprises a first pyrometer channel Ch1 comprising a first optical detector operating at a first wavelength $\lambda_1$, and a second pyrometer channel Ch2 comprising a second optical detector (not separately shown) operating at a second wavelength $\lambda_2$ different from the first wavelength $\lambda_1$, which are included in the sensing head 1. The first wavelength $\lambda_1$ and second wavelength $\lambda_2$ are intended as effective wavelengths for the first and second pyrometer channels Ch1 and Ch2, respectively.

The pyrometer is arranged outside a processing chamber 6 in such a manner that the pyrometer is adapted to measure a thermal radiation signal received from a sample 2 located inside the processing chamber 6, wherein the thermal radiation passes through a window 4 before reaching the pyrometer. The first and second detectors are adapted to measure light emitted from the sample 2.

The bandwidth of the first pyrometer channel Ch1 operating at wavelength $\lambda_1$ is chosen small. For the purposes of the present invention the bandwidth of the first pyrometer channel Ch1 is preferably less than 10nm. In addition, due to the small bandwidth at wavelength $\lambda_1$, an absolute calibration and a stray light correction as disclosed in the cited prior art can be performed.

However a small bandwidth also leads to a somewhat noisier temperature signal. Therefore, in order to enhance the sensitivity of temperature sensing the bandwidth of the second pyrometer channel Ch2 operating at wavelength $\lambda_2$ is chosen broad, so that a significantly higher sensitivity is realized and Fabry-Perot interference structures during thin-film processes are broadened. For the purposes of the present invention the bandwidth of the second pyrometer channel Ch2 is preferably larger than 100nm.

The narrow bandwidth of the first pyrometer channel may be defined by a filter having a band-pass of, e.g., less than 20nm, while the broader bandwidth of the second pyrometer channel may be defined by a filter having a band-pass of, e.g., more than 50nm.

According to an aspect of the present invention, a third pyrometer channel Ch3 operating at a third wavelength $\lambda_3$ and having a broad bandwidth may be provided for performing two-colour pyrometry, wherein the ratio of the signals from the two broadband pyrometer channels Ch2 and Ch3 provides the basis for a temperature measurements. The third pyrometer channel Ch3 has a broader bandwidth than the first pyrometer channel, for instance, the bandwidth of the third pyrometer channel may be broader than 200nm.

In a linearized form, the pyrometric signal I is related to the absolute temperature T (in Kelvin) through the equation

$$\log I = A + B\frac{1000}{T} \qquad \text{(Eq.0)}$$

wherein A is an intersect parameter and B is the slope.

The first pyrometer channel Ch1 is calibrated by means of a calibration sphere with a cold LED light source using a tool calibration method. According to this method an offset-parameter S is determined, which reflects the difference between the measured temperature and the expected temperature:

$$\frac{1000}{T_{pyro2}} = \frac{1000}{T_{pyro}} + \frac{\log S}{B} \qquad \text{(Eq.1)}$$

wherein $T_{pyro}$ is the correct temperature, $T_{pyro2}$ is the temperature that needs to be corrected (both in Kelvin), and B is the slope - which is always negative. Said parameter S corresponds to a uniform - i.e. not dependent on the wavelength - scaling of the thermal photocurrent and is supplied to the channels having a broad bandwidth, i.e. to the second and - if present - to the third pyrometer channels Ch2 and Ch3.

The equation above can be written as

$$-\frac{\log S}{B} = 1000 \times \left(\frac{1}{T_{pyro}} - \frac{1}{T_{pyro2}}\right) \qquad \text{(Eq.2)}$$

For a narrow-band channel

$$\delta = 1000 \times \left(\frac{1}{T_{pyro}} - \frac{1}{T_{pyro2}}\right) \qquad \text{(Eq.3)}$$

Thus:

$$\delta = -\frac{\log S}{B} \qquad \text{(Eq.4)}$$

The geometric intensity change is the same for all detectors (narrow-band and broadband). The transition from narrow-band calibration to broadband calibration can be done via

$$\delta^* = -\frac{\log S}{B^*} = -\frac{\log S}{B} \times \frac{B}{B^*} = \delta \times \frac{B}{B^*} \qquad \text{(Eq.5)}$$

wherein $\delta$ is an offset to the intersect parameter A, determined with the narrow-band detector set to a certain gain range with a corresponding slope B. For all other gain ranges of the narrow-band detector and all gain ranges of the broadband detectors with corresponding slopes B* the parameter $\delta^*$ is determined using the ratio of B/B*.

According to a further aspect of the invention, a cross calibration of the first and second pyrometer channels may be performed using a substrate with a well-known emissivity (e.g. highly doped Silicon) and scanning the complete temperature range, which may be, for instance, between 400 °C and 1400 °C. Said emissivity together with the offset-parameter used for the calibration of the first pyrometer channel Ch1 can provide a highly accurate temperature reading from Ch1. Furthermore, this highly accurate temperature from Ch1 is used for the calibration of the channels having a broad bandwidth, i.e. to the second and - if present - to the third pyrometer channels Ch2 and Ch3. With this type of cross calibration a correction function for the broadband channels can be determined, which could be a polynomial function or a point-wise correction (e.g. in steps of 5°C) with an intermediate interpolation. This method is capable to correct also non-uniform effects in the broadband channels.

According to another aspect of the invention, the first pyrometer channel Ch1 may comprise a first light source with a narrow bandwidth emitting light at the first wavelength $\lambda_1$, In this case the sample 2 is irradiated by means of the first light source and the first pyrometer channel Ch1 measures the light reflected from the sample 2. Due to the small bandwidth at wavelength $\lambda_1$, the emissivity correction according to EP0701686B1 can be performed in addition to an absolute calibration and a stray light correction as disclosed in the cited prior art.

The embodiment with a first pyrometer comprising the first light source can also be combined with the embodiment comprising a third pyrometer channel Ch3 having a broad bandwidth.

Another problem affecting the temperature detection is that the window 4 in the process chamber 6 undergoes a progressive coating during the manufacturing process, which produces artefacts in in-situ pyrometric measurements.

In order to compensate for such artefacts, an additional correction for the window coating is applied to the signal detected by the first pyrometer channel Ch1.

If $I_p^0$ is the intensity of thermal radiation detected by the pyrometer in the ideal case of a clean window with transmission $T_w^0$, in case of reduced view-port transmission $T_w^c$ due to window coating, the intensity $I_p^0$ of thermal radiation arriving at the window is reduced to $I_p^c$ before reaching the pyrometer, wherein:

$$I_p^c = (T_w^c / T_w^0) \cdot I_p^0 \qquad\qquad \text{(Eq.6)}$$

The operator "$\cdot$" represents a multiplication.

According to an aspect of the present invention, the reflectance R of the sample 2 is measured at a clean window - i.e. at the window 4 before the processing begins - by applying a calibration factor $\alpha^0$ to the signal $D^0$ measured by the detector:

$$R = \alpha^0 \cdot D^0. \qquad\qquad \text{(Eq.7)}$$

To this purpose an in-situ reflectance system is integrated into the pyrometer to perform the reflectance measurement. Said in-situ reflectance system may include, for instance, an additional, modulated light source and a filter selecting the same wavelength as the one used for the first pyrometer channel Ch1.

In case of window coating the signal arriving at the detector is reduced to

$$D^c = (T_w^c / T_w^0)^2 \cdot D^0 \qquad\qquad \text{(Eq.8)}$$

Hence, by appropriate calibration of the reflectance system to the reflectance of a known sample (e.g., a clean, uncoated semiconductor wafer prior to deposition, or the exit aperture of the calibration sphere with a cold LED light source, covered by a material of known reflectance) a corrected calibration factor $\alpha^c$ is determined and thereby the correct reflectance R can be obtained even with a coated window, as long as the coating is moderate and sufficient remaining light can pass through:

$$R = \alpha^c \cdot D^c \qquad\qquad \text{(Eq.9)}$$

Furthermore, this calibration procedure for the reflectance measurement can also provide a correction for the pyrometric measurement. Considering that the light thermally emitted by the sample 2 inside the processing chamber 6 passes through the window 4 only once, the real intensity of thermal radiation $I_p^0$ can be calculated from the reduced thermal radiation $I_p^c$ measured at by the first detector according to:

$$I_p^0 = \frac{Tw0}{Twc} \cdot I_p^c \quad = \sqrt{\frac{\alpha c}{\alpha 0}} \cdot I_p^c \quad \text{(Eq. 10)}$$

Finally, with the corrected total thermally emitted intensity $I_p^0$ the first pyrometer channel Ch1 with small bandwidth at wavelength $\lambda_1$ is capable of determining the accurate temperature T1 even with a coated window.

Summarizing, the calibration process is conduced as follows: in a first step at the beginning of the process, at a sufficiently high temperature, the temperature T1 is precisely measured by the first pyrometer channel Ch1 operating at wavelength $\lambda_1$. Emissivity correction and offset calibration using a calibration sphere with a cold LED light source according to the methods of the prior art are routinely applied. The only remaining disadvantage is that the temperature signal measured at the first pyrometer channel Ch1 could be somewhat noisier than the signal measured at the second pyrometer channel Ch2, since fewer thermal photons are detected through the smaller bandwidth. Thus, non-ideal samples (e.g. with rough surfaces) could cause small remaining signal oscillations due to incomplete emissivity correction.

On the other hand, the second pyrometer channel Ch2 gives smooth and low-noise output-signal that would be best choice for real-time control of a heating system of the growth chamber. However, the temperature T2 measured by the second pyrometer channel Ch2 is typically shifted off the true temperature by a temperature off-set $\Delta$T2 due to the artefacts described above.

In order to overcome the drawback connected with the second pyrometer channel Ch2, the precise, corrected temperature T1 measured by the first pyrometer channel Ch1 is used for cross-calibration of the second pyrometer channel Ch2. The temperature off-set $\Delta$T2 due to the various artefacts described above is obtained by direct comparison to T1. An appropriate correction in the well-known pyrometric formulas is to be applied and a correct, low-noise signal T2$^{corr}$ can be applied to feed-back control, wherein:

$$T2^{corr} = T2 - \Delta T2 \, (T, T1, \lambda_1, \lambda_2, \dots) \qquad \text{(Eq. 11)}$$

According to the present invention, a system for performing real-time measurements of the temperature of a semiconducting wafer during the manufacturing process is provided, wherein the system provides an accurate and stable measurement.

According to the present invention, a method for calibrating a two-wavelength pyrometer and a method for determining the temperature of a semiconducting wafer are provided, wherein the pyrometer comprises a first channel operating at a first wavelength and having a small bandwidth, and a second channel operating at a second wavelength and having a broader bandwidth. The first channel is used to determine a temperature T1 which is used for the calibration of the second channel. The calibration of the second channel is performed before the manufacturing process starts or during routine maintenance or downtime periods between processes. The second channel is then used to perform real-time measurements and monitor or control the temperature of the semiconducting sample during the manufacturing process. Since the second pyrometer channel has a broader bandwidth, it provides low-noise, and - because of the calibration operated by the first channel - also very accurate temperature readings.

**List of reference signs**

| 1 | sensing head/pyrometer/detector/light source |
| 2 | semiconducting wafer |
| 4 | window of the processing chamber |
| 5 | data processing unit |
| 6 | processing chamber |

**Claims**

1. Method for calibrating a pyrometer (1) adapted to be situated outside a processing chamber (6) and to intercept and measure thermal radiation from a sample (2) positioned inside the processing chamber (6), the radiation travelling through a window (4) before reaching the pyrometer (1), wherein the pyrometer has a first pyrometer channel (Ch1) working at a first effective wavelength ($\lambda_1$) and a second pyrometer channel (Ch2) working at a second effective wavelength ($\lambda_2$), the first wavelength and the second wavelength being different from each other, whereby the effective wavelength is defined as the maximum of the convolution of the detector's spectral sensitivity and the Planck's curve of the thermal radiation, averaged over a certain range of interest, the method comprising:

   a) pre-calibrating the first pyrometer channel (Ch1) by means of a calibration sphere with a cold LED light source;
   b) providing a sample (2) inside the processing chamber (6), wherein the sample (2) comprises a semiconducting wafer,
   c) heating the sample (2) to a first temperature (T1), the first temperature (T1) scanning over the complete temperature range of the pyrometer,
   d) measuring a first signal from the sample (2) for different temperatures within the scanned temperature range and assigning each value of the first temperature (T1) to the corresponding temperature measured by the first pyrometer channel (Ch1),

wherein a bandwidth of the first pyrometer channel (Ch1) is smaller than 30 nm,

e) measuring a second signal from the sample (2) by the second pyrometer channel (Ch2), wherein a bandwidth of the second pyrometer channel (Ch2) is greater than 200nm,

f) calculating a corrected value of the second temperature ($T2_{corr}$) measured by the second pyrometer channel (Ch2) based on the first temperature (T1) measured by the first pyrometer channel (Ch1), thereby calibrating the pyrometer (1),

wherein the pyrometer (1) further comprises an additional modulated light source and a filter for selecting the first wavelength $\lambda_1$, and wherein the method further comprises:

g) calculating the reflectance R of the sample (2), wherein $R = \alpha_0 \cdot D_0$ is based on a measured signal $D_0$ at a clean window and a calibration factor $\alpha_0$,

h) calculating a corrected calibration factor $\alpha_c$ based on the reflectance R and a measured signal $D_c$ received through the window (4) including a coating,

i) calculating a transmittance $Tw_0$ through a clean window and the transmittance $Tw_c$ through the window (4) affected by the coating from the calibration factor $\alpha_0$ and the corrected calibration factor $\alpha_c$, and

j) calculating the real intensity of thermal radiation $I_p^0$ at the first temperature T1 by using the reduced intensity of thermal radiation $I_p^c$, the transmittance $Tw_0$ through a clean window and the transmittance $Tw_c$ through the window (4) affected by the coating, according to the formula $I_p^0 = (T_w^0/T_w^c) \cdot I_p^c$.

2. The method of claim 1,
   wherein the first pyrometer channel (Ch1) and the second pyrometer channel (Ch2) collect light from the same area of the sample (2).

3. The method according to one of the preceding claims,
   wherein step c) comprises irradiating a first optical radiation having a first wavelength ($\lambda_1$) onto the sample (2) by means of a first light source comprised in the first pyrometer channel (Ch1) and measuring a first reflection signal resulting from reflection of the first radiation on the sample (2).

4. The method according to one of the preceding claims,
   wherein the first wavelength $\lambda_1$ ranges between 800 nm and 1100 nm.

5. The method according to one of the preceding claims,
   wherein the second wavelength $\lambda_2$ ranges between 950nm and 1100nm or between 1450nm and 1600nm.

6. The method according to one of the preceding claims,
   wherein the pyrometer (1) further comprises a third pyrometer channel (Ch3) operating at a third wavelength $\lambda_3$ different from the first wavelength $\lambda_1$ and from the second wavelength $\lambda_2$, wherein a bandwidth of the third pyrometer channel (Ch3) is greater than a bandwidth of the first pyrometer channel (Ch1) and
   wherein the temperature measurement is based on the ratio of the signals measured by the second and third pyrometer channel (Ch2, Ch3).

7. A system adapted for determining the temperature of a semiconducting wafer (2), the system comprising:

   a sample (2) comprising a semiconducting wafer,
   a pyrometer (1) comprising:

   a first pyrometer channel (Ch1) comprising a first optical detector and adapted to measure a first signal at a first wavelength $\lambda_1$ from the sample (2), wherein a bandwidth of the first pyrometer channel (Ch1) is smaller than 30nm,
   a second pyrometer channel (Ch2) comprising a second optical detector and adapted to measure a second signal at a second wavelength $\lambda_2$ different from the first wavelength $\lambda_1$ from the sample (2), wherein a bandwidth of the second pyrometer channel (Ch2) is greater than 200nm, and
   a control unit adapted to calibrate the pyrometer (1) according to the method of one of claims 1-6,
   wherein the pyrometer (1) further comprises an additional modulated light source and a filter for selecting the first wavelength $\lambda_1$ for measuring the reflectance of the sample through a clean window, and
   the control unit further comprises means for correcting the intensity of the thermal radiation measured by the first pyrometer channel (Ch1) based on the transmittance $T_w^0$ through a clean window and the transmittance $T_w^c$ through the window (4) affected by coating, according to the formula $I_p^0 = (T_w^0 / T_w^c) \cdot I_p^c$.

**8.** The system of claim 7,
wherein the first pyrometer channel (Ch1) further comprises a first light source adapted to irradiate a first optical radiation at the first wavelength $\lambda_1$ onto the sample (2).

**Patentansprüche**

**1.** Verfahren zur Kalibrierung eines Pyrometers (1), so angepasst, dass es sich außerhalb einer Bearbeitungskammer (6) befindet und die Wärmestrahlung von einer im Inneren der Bearbeitungskammer (6) positionierten Probe (2) abfängt und misst, wobei die Strahlung vor dem Erreichen des Pyrometers (1) ein Fenster (4) passiert, wobei das Pyrometer einen bei einer ersten effektiven Wellenlänge ($\lambda_1$) arbeitenden ersten Pyrometerkanal (Ch1) und einen bei einer zweiten effektiven Wellenlänge ($\lambda_2$) arbeitenden zweiten Pyrometerkanal (Ch2), aufweist, wobei sich die erste Wellenlänge und die zweite Wellenlänge voneinander unterscheiden, wobei die effektive Wellenlänge als Maximum der Faltung der spektralen Empfindlichkeit des Detektors und der Planck-Kurve der Wärmestrahlung, gemittelt über einen bestimmten Bereich von Interesse, definiert ist, wobei das Verfahren umfasst:

a) Vorkalibrieren des ersten Pyrometerkanals (Ch1) mithilfe einer Kalibrierkugel mit einer kalten LED-Lichtquelle;
b) Bereitstellen einer Probe (2) im Inneren der Bearbeitungskammer (6), wobei die Probe (2) einen Halbleiterwafer umfasst,
c) Erwärmen der Probe (2) auf eine erste Temperatur (T1), wobei die erste Temperatur (T1) den gesamten Temperaturbereich des Pyrometers abtastet,
d) Messen eines ersten Signals von der Probe (2) bei verschiedenen Temperaturen in dem abgetasteten Temperaturbereich und Zuordnen jedes Wertes der ersten Temperatur (T1) der entsprechenden, durch den ersten Pyrometerkanal (Ch1) gemessenen Temperatur, wobei eine Bandbreite des ersten Pyrometerkanals (Ch1) kleiner als 30 nm ist,
e) Messen eines zweiten Signals von der Probe (2) durch den zweiten Pyrometerkanal (Ch2), wobei eine Bandbreite des zweiten Pyrometerkanals (Ch2) größer als 200 nm ist,
f) Berechnen eines korrigierten Wertes der durch den zweiten Pyrometerkanal (Ch2) gemessenen zweiten Temperatur (T2$_{corr}$), basierend auf der durch den ersten Pyrometerkanal (Ch1) gemessenen ersten Temperatur (T1), dadurch Kalibrieren des Pyrometers (1),
wobei das Pyrometer (1) weiterhin eine zusätzliche modulierte Lichtquelle und einen Filter zum Auswählen der ersten Wellenlänge ($\lambda_1$) umfasst, und wobei das Verfahren weiterhin umfasst:
g) Berechnen des Reflexionsgrades R der Probe (2), wobei R = $\alpha_0 \cdot D_0$ auf einem gemessenen Signal $D_0$ bei einem sauberen Fenster und einem Kalibrierungsfaktor $\alpha_0$ basiert,
h) Berechnen eines korrigierten Kalibrierungsfaktors $\alpha_c$, basierend auf dem Reflexionsgrad R und einem gemessenen Signal $D_c$, das durch das Fenster (4) mit einer Beschichtung erhalten wird,
i) Berechnen einer Transmission Tw$_0$ durch ein sauberes Fenster und der Transmission Tw$_c$ durch das durch die Beschichtung beeinflusste Fenster (4) aus dem Kalibrierungsfaktor $\alpha_0$ und dem korrigierten Kalibrierungsfaktor $\alpha_c$, und
j) Berechnen der tatsächlichen Intensität der Wärmestrahlung I$_p^0$ bei der ersten Temperatur T1 durch Verwendung der verringerten Intensität der Wärmestrahlung I$_p^c$, der Transmission Tw$_0$ durch ein sauberes Fenster und der Transmission Tw$_c$ durch das durch die Beschichtung beeinflusste Fenster (4), gemäß der Formel I$_p^0$ = (T$_w^0$/T$_w^0$) $\cdot$ I$_p^c$.

**2.** Verfahren nach Anspruch 1,
wobei der erste Pyrometerkanal (Ch1) und der zweite Pyrometerkanal (Ch2) Licht von demselben Bereich der Probe (2) sammeln.

**3.** Verfahren nach einem der vorangehenden Ansprüche,
wobei Schritt c) das Einstrahlen einer ersten optischen Strahlung mit einer ersten Wellenlänge ($\lambda1$) auf die Probe (2) mittels einer in dem ersten Pyrometerkanal (Ch1) enthaltenen ersten Lichtquelle und das Messen eines ersten Reflexionssignals, das auf die Reflexion der ersten Strahlung an der Probe (2) zurückzuführen ist, umfasst.

**4.** Verfahren nach einem der vorangehenden Ansprüche,
wobei die erste Wellenlänge $\lambda_1$ zwischen 800 nm und 1100 nm liegt.

**5.** Verfahren nach einem der vorangehenden Ansprüche,
wobei die zweite Wellenlänge $\lambda_2$ zwischen 950 nm und 1100 nm oder zwischen 1450 nm und 1600 nm liegt.

**6.** Verfahren nach einem der vorangehenden Ansprüche,
wobei das Pyrometer (1) weiterhin einen dritten Pyrometerkanal (Ch3) umfasst, der bei einer dritten Wellenlänge $\lambda_3$, die sich von der ersten Wellenlänge $\lambda_1$ und von der zweiten Wellenlänge $\lambda_2$ unterscheidet, arbeitet, wobei eine Bandbreite des dritten Pyrometerkanals (Ch3) größer als eine Bandbreite des ersten Pyrometerkanals (Ch1) ist, und wobei die Temperaturmessung auf dem Verhältnis der durch den zweiten und dritten Pyrometerkanal (Ch2, Ch3) gemessenen Signale basiert.

**7.** System, angepasst zur Bestimmung der Temperatur eines Halbleiterwafers (2), wobei das System umfasst:

eine Probe (2), umfassend einen Halbleiterwafer,
ein Pyrometer (1), umfassend:

einen ersten Pyrometerkanal (Ch1), umfassend einen ersten optischen Detektor und angepasst zum Messen eines ersten Signals bei einer ersten Wellenlänge $\lambda_1$ von der Probe (2), wobei eine Bandbreite des ersten Pyrometerkanals (Ch1) kleiner als 30 nm ist,
einen zweiten Pyrometerkanal (Ch2), umfassend einen zweiten optischen Detektor und angepasst zum Messen eines zweiten Signals bei einer zweiten Wellenlänge $\lambda_2$, die sich von der ersten Wellenlänge $\lambda_1$ unterscheidet, von der Probe (2), wobei eine Bandbreite des zweiten Pyrometerkanals (Ch2) größer als 200 nm ist, und

eine Steuereinheit, angepasst zum Kalibrieren des Pyrometers (1) gemäß dem Verfahren nach einem der Ansprüche 1-6,
wobei das Pyrometer (1) weiterhin eine zusätzliche modulierte Lichtquelle und einen Filter zum Auswählen der ersten Wellenlänge $\lambda_1$ zur Messung des Reflexionsgrades der Probe durch ein sauberes Fenster umfasst, und
die Steuereinheit weiterhin Mittel zum Korrigieren der durch den ersten Pyrometerkanal (Ch1) gemessenen Intensität der Wärmestrahlung, basierend auf der Transmission $T_w^0$ durch ein sauberes Fenster und der Transmission $T_w^c$ durch das durch die Beschichtung beeinflusste Fenster (4), gemäß der Formel $I_p^0 = (T_w^0/T_w^c) \cdot I_p^c$, umfasst.

**8.** System nach Anspruch 7,
wobei der erste Pyrometerkanal (Ch1) weiterhin eine erste Lichtquelle, angepasst zum Einstrahlen einer ersten optischen Strahlung mit der ersten Wellenlänge $\lambda_1$ auf die Probe (2) umfasst.

## Revendications

**1.** Procédé d'étalonnage d'un pyromètre (1) configuré pour être situé à l'extérieur d'une chambre de traitement (6) et pour intercepter et mesurer un rayonnement thermique émis par un échantillon (2) placé à l'intérieur de la chambre de traitement (6), le rayonnement passant à travers une fenêtre (4) avant d'atteindre le pyromètre (1), où le pyromètre présente une première voie du pyromètre (Ch1) fonctionnant à une première longueur d'onde efficace ($\lambda_1$) et une deuxième voie du pyromètre (Ch2) fonctionnant à une deuxième longueur d'onde efficace ($\lambda_2$), la première longueur d'onde et la deuxième longueur d'onde étant différentes l'une de l'autre,
la longueur d'onde efficace étant définie comme le maximum de la convolution de la sensibilité spectrale du détecteur et de la courbe de Planck du rayonnement thermique, moyenné sur une certaine plage d'intérêt, le procédé comprenant :

a) le pré-étalonnage de la première voie du pyromètre (Ch1) au moyen d'une sphère d'étalonnage en utilisant une source de lumière LED froide ;
b) la mise en place d'un échantillon (2) à l'intérieur de la chambre de traitement (6), où l'échantillon (2) comprend une plaquette semi-conductrice,
c) le chauffage de l'échantillon (2) à une première température (T1), la première température (T1) balayant la plage complète de températures du pyromètre,
d) la mesure d'un premier signal émis par l'échantillon (2) pour différentes températures au sein de la plage de températures balayée et l'allocation de chaque valeur de la première température (T1) à la température correspondante mesurée par la première voie du pyromètre (Ch1), où une largeur de bande de la première voie du pyromètre (Ch1) est inférieure à 30 nm,
e) la mesure d'un deuxième signal émis par l'échantillon (2) par la deuxième voie du pyromètre (Ch2), où une largeur de bande de la deuxième voie du pyromètre (Ch2) est supérieure à 200 nm,

f) le calcul d'une valeur corrigée de la deuxième température ($T2_{corr}$) mesurée par la deuxième voie du pyromètre (Ch2) sur la base de la première température (T1) mesurée par la première voie du pyromètre (Ch1), étalonnant ainsi le pyromètre (1), où le pyromètre (1) comprend également une source supplémentaire de lumière modulée et un filtre permettant de sélectionner la première longueur d'onde $\lambda_1$, et où le procédé comprend en outre :

g) le calcul du facteur de réflexion R de l'échantillon (2), où R= $\alpha_0 \cdot D_0$ est basé sur un signal mesuré $D_0$ au niveau d'une fenêtre propre et un facteur d'étalonnage $\alpha_0$,

h) le calcul d'un facteur d'étalonnage corrigé $\alpha_c$ sur la base du facteur de réflexion R et d'un signal mesuré $D_c$ reçu au travers de la fenêtre (4) incluant un revêtement,

i) le calcul d'un facteur de transmission $Tw_0$ au travers d'une fenêtre propre et du facteur de transmission $Tw_C$ au travers de la fenêtre (4) incluant un revêtement à partir du facteur d'étalonnage $\alpha_0$ et du facteur d'étalonnage corrigé $\alpha_c$, et

j) le calcul de l'intensité réelle du rayonnement thermique $I_p^0$ à la première température T1 en utilisant l'intensité réduite du rayonnement thermique $I_p^c$, le facteur de transmission au travers d'une fenêtre propre $Tw_0$ et le facteur de transmission $Tw_C$ au travers de la fenêtre (4) incluant un revêtement conformément à la formule $I_p^0 = (Tw_0/Tw_C) \cdot I_p^c$.

2. Procédé de la revendication 1,
où la première voie du pyromètre (Ch1) et la deuxième voie du pyromètre (Ch2) recueillent une lumière provenant de la même zone de l'échantillon (2).

3. Procédé selon l'une quelconque des revendications précédentes,
où l'étape c) comprend l'irradiation d'un premier rayonnement optique ayant une première longueur d'onde ($\lambda_1$) sur l'échantillon (2) au moyen d'une première source de lumière comprise dans la première voie du pyromètre (Ch1) et la mesure d'un premier signal de réflexion résultant de la réflexion du premier rayonnement sur l'échantillon (2).

4. Procédé selon l'une quelconque des revendications précédentes, où la première longueur d'onde $\lambda_1$ est entre 800 nm et 1100 nm.

5. Procédé selon l'une quelconque des revendications précédentes,
où la deuxième longueur d'onde $\lambda_2$ est entre 950 nm et 1100 nm ou entre 1450 nm et 1600 nm.

6. Procédé selon l'une quelconque des revendications précédentes,
où le pyromètre (1) comprend également une troisième voie du pyromètre (Ch3) fonctionnant à une troisième longueur d'onde $\lambda_3$ différente de la première longueur d'onde $\lambda_1$ et de la deuxième longueur d'onde $\lambda_2$, où une largeur de bande de la troisième voie du pyromètre (Ch3) est plus élevée qu'une largeur de bande de la première voie du pyromètre (Ch1) et
où la mesure de la température est basée sur le rapport des signaux mesurés par la deuxième et la troisième voies du pyromètre (Ch2, Ch3).

7. Système configuré pour déterminer la température d'une plaquette semi-conductrice (2), le système comprenant :

un échantillon (2) comprenant une plaquette semi-conductrice,
un pyromètre (1) comprenant :

une première voie du pyromètre (Ch1) comprenant un premier détecteur optique et configurée pour mesurer un premier signal émis par l'échantillon (2) à une première longueur d'onde $\lambda_1$, où une largeur de bande de la première voie du pyromètre (Ch1) est inférieure à 30 nm,
une deuxième voie du pyromètre (Ch2) comprenant un deuxième détecteur optique et configurée pour mesurer un deuxième signal émis par l'échantillon (2) à une deuxième longueur d'onde $\lambda_2$ différente de la première longueur d'onde $\lambda_1$, où une largeur de bande de la deuxième voie du pyromètre (Ch2) is est supérieure à 200 nm et
une unité de commande configurée pour étalonner le pyromètre (1) conformément au procédé de l'une des revendications 1-6,
où le pyromètre (1) comprend également une source supplémentaire de lumière modulée et un filtre permettant de sélectionner la première longueur d'onde $\lambda_1$ pour mesurer le facteur de réflexion de l'échantillon au travers d'une fenêtre propre et
l'unité de commande comprend également un moyen permettant de corriger l'intensité du rayonnement thermique mesurée par la première voie du pyromètre (Ch1) sur la base du facteur de transmission $Tw_0$

au travers d'une fenêtre propre et du facteur de transmission $Tw_c$ au travers de la fenêtre (4) incluant un revêtement conformément à la formule $I_p^0 = (Tw_0/Tw_C) \cdot I_p^C$.

8. Système de la revendication 7,
   où la première voie du pyromètre (Ch1) comprend également une première source de lumière configurée pour irradier un premier rayonnement optique à la première longueur d'onde $\lambda_1$ sur l'échantillon (2).

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2365307 B1
- EP 2251658 B1

- EP 0701686 B1

**Non-patent literature cited in the description**

- **W. G. BREILAND.** Reflectance-Correcting Pyrometry in Thin Film Deposition Applications. *Sandia Natl. Labs report SAND2003-1868*